# EUROPEAN PATENT APPLICATION

(11) **EP 4 579 779 A1**
(43) Date of publication of application: **02.07.2025**
(21) Application number: 23882416.3
(22) Date of filing: 11.10.2023
(51) Int. Cl.: H01M 4/13, H01M 4/64, H01M 4/66

(54) **POSITIVE ELECTRODE FOR NON-AQUEOUS ELECTROLYTE POWER STORAGE ELEMENT, AND NON-AQUEOUS ELECTROLYTE POWER STORAGE ELEMENT**

(30) Priority: 26.10.2022 JP 2022171612
(71) Applicant: GS Yuasa International Ltd., Kisshoin, Minami-ku, Kyoto-shi, Kyoto 601-8520 (JP); Blue Energy Co., Ltd., Kyoto-shi, Kyoto 601-8520 (JP)
(72) Inventor: FURUYA, Yasuyuki, Kyoto-shi, Kyoto 601-8520 (JP); MATSUO, Kazuaki, Kyoto-shi, Kyoto 601-8520 (JP)
(74) Representative: Isarpatent
(86) International application number: PCT/JP2023/036849
(87) International publication number: WO 2024/090207

(57) **Abstract**

A positive electrode for a nonaqueous electrolyte energy storage device according to one aspect of the present invention includes a positive electrode substrate containing metallic aluminum, and a positive active material layer stacked on the positive electrode substrate. An elongation at break of the positive electrode substrate is 3.8% or less. The average thickness of the positive active material layer is 35 µm or less. A 180° peel strength between the positive active material layer and the positive electrode substrate is 0.6 N/mm or more.

## Description

### TECHNICAL FIELD

The present invention relates to a positive electrode for a nonaqueous electrolyte energy storage device and a nonaqueous electrolyte energy storage device.

### BACKGROUND ART

A nonaqueous electrolyte secondary battery typified by a lithium ion secondary battery is often used for electronic devices such as personal computers and communication terminals, motor vehicles, and the like, because the battery is high in energy density. The nonaqueous electrolyte secondary battery generally includes a pair of electrodes electrically separated from each other by a separator, and a nonaqueous electrolyte interposed between the electrodes, and are configured to allow charge transport ions to be transferred between the two electrodes for charge-discharge. In addition, capacitors such as a lithium ion capacitor and an electric double-layer capacitor are also widely in use as a nonaqueous electrolyte energy storage device other than the nonaqueous electrolyte secondary battery.

A positive electrode used in the nonaqueous electrolyte energy storage device generally has a structure in which a positive active material layer is stacked on a positive electrode substrate. As the positive electrode substrate, a foil made of metallic aluminum is widely used from the viewpoint of high conductivity and the like (see Patent Document 1).

### PRIOR ART DOCUMENT

### PATENT DOCUMENT

Patent Document 1: JP-A-2017-201589

### SUMMARY OF THE INVENTION

### PROBLEMS TO BE SOLVED BY THE INVENTION

Usually, when a positive electrode is produced, a positive active material layer is formed on a positive electrode substrate by applying and drying a positive composite paste, and then the positive active material layer is pressed by a pressing device such as a roll press. The obtained positive electrode and a negative electrode are wound in a state of being overlapped with each other with a separator interposed therebetween, thereby preparing a wound electrode assembly. Here, in order to suppress the flaking of the positive active material layer in the preparing process of the electrode assembly or the like, it is desirable to press the positive active material layer at a high pressure in the producing process of the positive electrode to firmly adhere the positive active material layer to the positive electrode substrate. However, the inventors have found that the positive electrode obtained by pressing at a high pressure is apt to meander when supplied to a winding device (hereinafter, the fact that the positive electrode is apt to meander when supplied to the winding device is referred to as "low foil passing property", and the fact that the positive electrode is less likely to meander is referred to as "high foil passing property"). When such a positive electrode having low foil passing property is used, the positional deviation in the width direction of the positive electrode in the obtained wound electrode assembly tends to increase, leading to an increase in the defect rate.

The present invention has been made in view of the circumstances as described above, and an object of the present invention is to provide a positive electrode for a nonaqueous electrolyte energy storage device in which the flaking of a positive active material layer is suppressed and which has high foil passing property, and a nonaqueous electrolyte energy storage device including such a positive electrode.

### MEANS FOR SOLVING THE PROBLEMS

A positive electrode for a nonaqueous electrolyte energy storage device according to one aspect of the present invention (hereinafter, also simply referred to as a "positive electrode") includes a positive electrode substrate containing metallic aluminum, and a positive active material layer stacked on the positive electrode substrate, wherein an elongation at break of the positive electrode substrate is 3.8% or less, an average thickness of the positive active material layer is 35 µm or less, and a 180° peel strength between the positive active material layer and the positive electrode substrate is 0.6 N/mm or more.

A nonaqueous electrolyte energy storage device according to another aspect of the present invention includes the positive electrode according to one aspect of the present invention.

### ADVANTAGES OF THE INVENTION

According to one aspect of the present invention, it is possible to provide a positive electrode for a nonaqueous electrolyte energy storage device in which the flaking of a positive active material layer is suppressed and which has high foil passing property, and a nonaqueous electrolyte energy storage device including such a positive electrode.

### BRIEF DESCRIPTION OF THE DRAWINGS

Fig. 1 is a see-through perspective view illustrating an embodiment of a nonaqueous electrolyte energy storage device.
Fig. 2 is a schematic diagram showing an embodiment of an energy storage apparatus including a plurality of nonaqueous electrolyte energy storage devices.
Fig. 3 is a graph showing a relationship between the elongation at break of a positive electrode substrate and the number of defects in a winding step.

### MODE FOR CARRYING OUT THE INVENTION

As will be appreciated from the following description and Examples, matters disclosed in the present specification include the following.
[1]: A positive electrode for a nonaqueous electrolyte energy storage device, including:
   a positive electrode substrate containing metallic aluminum; and a positive active material layer stacked on the positive electrode substrate, wherein
   an elongation at break of the positive electrode substrate is 3.8% or less,
   an average thickness of the positive active material layer is 35 µm or less, and
   a 180° peel strength between the positive active material layer and the positive electrode substrate is 0.6 N/mm or more.
[2]: The positive electrode according to [1], wherein the positive electrode has an average thickness of 80 µm or less.
[3]: The positive electrode according to [1] or [2], wherein the positive active material layer has a density of 2.6 g/cm³ or more.
[4]: A nonaqueous electrolyte energy storage device including the positive electrode according to any one of [1] to [3].

First, the outline of a positive electrode for a nonaqueous electrolyte energy storage device and a nonaqueous electrolyte energy storage device disclosed in the present specification will be described.
[1] A positive electrode for a nonaqueous electrolyte energy storage device according to one aspect of the present invention includes a positive electrode substrate containing metallic aluminum, and a positive active material layer stacked on the positive electrode substrate. An elongation at break of the positive electrode substrate is 3.8% or less. The average thickness of the positive active material layer is 35 µm or less. A 180° peel strength between the positive active material layer and the positive electrode substrate is 0.6 N/mm or more.

The positive electrode according to [1] has suppressed flaking of the positive active material layer and high foil passing property. Although a reason why the effect is generated is not clear, the following reasons are presumed. Usually, when the positive active material layer is provided thick, the partial flaking of the positive active material layer (typically, flaking of a surface layer portion of the positive active material layer) is apt to occur. When the peel strength between the positive active material layer and the positive electrode substrate is low, peeling between the layers is apt to occur. Meanwhile, in the positive electrode according to [1], the average thickness of the positive active material layer is 35 µm or less, and the 180° peel strength between the positive active material layer and the positive electrode substrate is 0.6 N/mm or more, so that the flaking of the positive active material layer is suppressed. In order to suppress the flaking of the positive active material layer, it is desirable to increase the pressure of pressing on the positive active material layer in the producing process as described above to firmly adhere the positive active material layer to the positive electrode substrate. However, when the elongation at break of the positive electrode substrate is large, the distortion or the like of the positive electrode substrate due to pressing at a high pressure is likely to occur, which is considered to deteriorate the foil passing property of the positive electrode. Meanwhile, in the positive electrode according to [1], it is considered that since the elongation at break of the positive electrode substrate is as small as 3.8% or less, distortion and the like is less likely to occur even when pressing is performed at a high pressure, and the foil passing property is high.

The "elongation at break" is a value measured in accordance with JIS-Z-2241 (2011) "Metal Material Tensile Test Method".

The "average thickness of the positive active material layer" and the "average thickness of the positive electrode" described later are average values of measured values of thickness at 10 arbitrary points. When the positive active material layer is provided on each of both surfaces of the positive electrode substrate, that is, when the positive electrode includes two positive active material layers, the average thickness of the positive active material layer refers to an average thickness in one positive active material layer. When the positive electrode includes two positive active material layers, at least one of the positive active material layers may have the average thickness. However, it is preferable that both the two positive active material layers have the average thickness.

The "180° peel strength" is a value measured in accordance with JIS-Z-0237 (2009) "Test Methods for Adhesive Tape and Adhesive Sheet". Specifically, the surface of the positive active material layer of the positive electrode measured using a double-sided tape having a sufficient adhesive strength is fixed to a measuring plate, and a strength when the positive electrode substrate is peeled from the positive active material layer fixed to the measuring plate at a peeling rate of 100 mm/min with a peeling angle set to 180° under the condition of 25°C using a digital force gauge DS2 as a measuring device is measured. When the positive active material layer is provided on each of both the surfaces of the positive electrode substrate, that is, when the positive electrode includes two positive active material layers, the average thickness of at least one of the positive active material layers may be 35 µm or less, and the 180° peel strength between the positive active material layer and the positive electrode substrate may be 0.6 N/mm or more. However, it is preferable that the average thickness of each of the two positive active material layers is 35 µm or less, and the 180° peel strength between each positive active material layer and the positive electrode substrate is 0.6 N/mm or more.

[2] In the positive electrode according to [1], the average thickness may be 80 µm or less. In the positive electrode according to [2], by reducing the thickness of the positive electrode itself in this manner, the flaking of the positive active material layer is further suppressed. Even when the thickness of the positive electrode itself is thin as described above, the elongation at break of the positive electrode substrate is 3.8% or less, so that distortion and the like is less likely to occur even when pressing is performed at a high pressure, and high foil passing property is exhibited.

[3] In the positive electrode according to [1] or [2], the positive active material layer may have a density of 2.6 g/cm³ or more. In the positive electrode according to [3], when the density of the positive active material layer is high as described above, the adhesion between particles constituting the positive active material layer and the adhesion between the positive active material layer and the positive electrode substrate layer are enhanced, so that the flaking of the positive active material layer is further suppressed.

The "density of the positive active material layer" is a value obtained from the average thickness, area, and mass of the positive active material layer. That is, the density of the positive active material layer is an apparent density.

[4] A nonaqueous electrolyte energy storage device according to another aspect of the present invention includes the positive electrode according to any one of [1] to [3]. In the nonaqueous electrolyte energy storage device according to [4], the positive electrode in which the flaking of the positive active material layer is suppressed and the foil passing property is high is used, so that a defect rate in a winding step is low, and various performances as the energy storage device are good.

Hereinafter, a positive electrode, a method for producing the same, a nonaqueous electrolyte energy storage device, an energy storage apparatus, and a method for producing a nonaqueous electrolyte energy storage device according to an embodiment of the present invention, and other embodiments will be described in detail. It is to be noted that the names of the respective constituent members (respective constituent elements) for use in the respective embodiments may be different from the names of the respective constituent members (respective constituent elements) for use in the background art.

### <Positive electrode>

The positive electrode according to an embodiment of the present invention includes a positive electrode substrate and a positive active material layer stacked on the positive electrode substrate directly or with an intermediate layer interposed therebetween. The positive electrode is a positive electrode for a nonaqueous electrolyte energy storage device. The positive electrode may be used for a wound electrode assembly or a stacked electrode assembly. The positive electrode is particularly suitable for a wound type electrode assembly from the viewpoint of sufficiently taking advantages of suppressing the flaking of the positive active material layer and high foil passing property at the time of preparing the electrode assembly. The positive electrode may have, for example, a band shape. In the positive electrode, the positive active material layer may be provided only on one surface of the positive electrode substrate, or may be provided on each of both the surfaces of the positive electrode substrate.

The positive electrode substrate has conductivity. It is determined whether or not the positive electrode substrate has "conductivity" by using, as a threshold, a volume resistivity measured in accordance with JIS-H-0505 (1975) of 10⁻² Ω ·cm. The shape of the positive electrode substrate is usually a sheet shape or a plate shape, and is preferably a foil formed in a sheet shape by being thinly press-expanded.

The positive electrode substrate contains metallic aluminum. That is, the material of the positive electrode substrate is usually either pure aluminum or an aluminum alloy. The material of the positive electrode substrate is preferably an aluminum alloy from the viewpoint of a strength. The content of the metallic aluminum in the positive electrode substrate may be, for example, 80% by mass or more and 100% by mass or less, 90% by mass or more, or 95% by mass or more.

The upper limit of the elongation at break of the positive electrode substrate is 3.8%, preferably 3.7%, more preferably 3.6%, and still more preferably 3.5%. When the elongation at break of the positive electrode substrate is equal to or less than the above upper limit, distortion and the like is less likely to occur when pressing is performed at a high pressure, and foil passing property is improved. The lower limit of the elongation at break of the positive electrode substrate may be 1.0%, or may be 2.0%, 2.5%, 3.0%, 3.2%, 3.4%, or 3.5%. The elongation at break of the positive electrode substrate may be equal to or more than any of the above lower limits and equal to or less than any of the above upper limits. As the elongation at break of the positive electrode substrate, a value in the stretching direction or the longitudinal direction of the positive electrode substrate is adopted.

As the positive electrode substrate, commercially available products having an elongation at break of 3.8% or less can be used from pure aluminum foils and aluminum alloy foils such as A1000 series (for example, A1100), A3000 series, and A1N30 series specified in JIS-H-4000 (2014) or JIS-H-4160 (2006). The elongation at break may be affected by the material of the positive electrode substrate and the thickness thereof and the like.

The average thickness of the positive electrode substrate is preferably 3 µm or more and 50 µm or less, more preferably 5 µm or more and 40 µm or less, still preferably 8 µm or more and 30 µm or less, and particularly preferably 10 µm or more and 25 µm or less. The average thickness of the positive electrode substrate may be 20 µm or less, or 16 µm or less (for example, 10 µm or more and 16 µm or less). The average thickness of the positive electrode substrate falls within the range mentioned above, thereby allowing the energy density per volume of the nonaqueous electrolyte energy storage device to be increased while increasing the strength of the positive electrode substrate. The average thickness of the positive electrode substrate may be equal to or more than any of the above lower limits and equal to or less than any of the above upper limits. The "average thickness" for the positive electrode substrate and the negative electrode substrate described below refers to a value obtained by dividing a cutout mass in cutout of a substrate that has a predetermined area by a true density and a cutout area of the substrate.

The intermediate layer is a layer disposed between the positive electrode substrate and the positive active material layer. The intermediate layer includes a conductive agent such as carbon particles, thereby reducing contact resistance between the positive electrode substrate and the positive active material layer. The configuration of the intermediate layer is not particularly limited, and includes, for example, a binder and a conductive agent.

The positive active material layer includes a positive active material. The positive active material layer contains optional components such as a conductive agent, a binder, a thickener, and a filler, if necessary.

The positive active material can be appropriately selected from known positive active materials. As a positive active material for a lithium ion secondary battery, a material capable of storing and releasing lithium ions is usually used. Examples of the positive active material include lithium transition metal composite oxides that have an α-NaFeO₂-type crystal structure, lithium transition metal oxides that have a spinel-type crystal structure, polyanion compounds, chalcogenides, and sulfur. Examples of the lithium transition metal composite oxides that have an α-NaFeO₂-type crystal structure include Li[LiₓNi₍₁₋ₓ₎]O₂ (0 ≤ x < 0.5), Li[LiₓNi_{γ}Co_{(1-x-γ)}]O₂ (0 ≤ x < 0.5, 0 < y < 1, 0 < 1-x-y), Li[LiₓCo₍₁₋ₓ₎]O₂ (0 ≤ x < 0.5), Li[LiₓNi_{y}Mn_{(1-x-γ})]O₂ (0 ≤ x < 0.5, 0 < y < 1, 0 < 1-x-y), Li[LiₓNi_{γ}Mn_{β}Co_{(1-x-γ-β)}]O₂ (0 ≤ x < 0.5, 0 < y, 0 < B, 0.5 < y + β < 1, 0 < 1-x-γ-β), and Li[LiₓNi_{γ}Co_{β}Al_{(1-x-γ-β)}]O₂ (0 ≤ x < 0.5, 0 < y, 0 < B, 0.5 < y + β < 1, 0 < 1-x-γ-β). Examples of the lithium-transition metal composite oxides having a spinel-type crystal structure include LiₓMn₂O₄ and LiₓNi_{y}Mn_{(2-γ)}O₄. Examples of the polyanion compounds include LiFePO₄, LiMnPO₄, LiNiPO₄, LiCoPO₄, Li₃V₂(PO₄)₃, Li₂MnSiO₄, and Li₂CoPO₄F. Examples of the chalcogenides include titanium disulfide, molybdenum disulfide, and molybdenum dioxide. Some of atoms or polyanions in these materials may be substituted with atoms or anion species composed of other elements. These materials may have surfaces coated with other materials. In the positive active material layer, one of these materials may be used singly, or two or more thereof may be used in mixture.

The positive active material is preferably a lithium transition metal composite oxide having an α-NaFeO₂-type crystal structure. Among the lithium transition metal composite oxides having an α-NaFeO₂-type crystal structure, those containing at least one of a nickel element, a cobalt element, and a manganese element are preferable, and those containing a nickel element, a cobalt element, and a manganese element are more preferable.

The positive active material is usually particles (powder). The average particle size of the positive active material is preferably 0.1 µm or more and 20 µm or less, for example. By setting the average particle size of the positive active material to be equal to or more than the lower limit, the positive active material is easily produced or handled. By setting the average particle size of the positive active material to be equal to or less than the upper limit, the electron conductivity of the positive active material layer is improved. It is to be noted that in the case of using a composite of the positive active material and another material, the average particle size of the composite is regarded as the average particle size of the positive active material. The term "average particle size" means a value at which a volume-based integrated distribution calculated in accordance with JIS-Z-8819-2 (2001) is 50% based on a particle size distribution measured by a laser diffraction/scattering method for a diluted solution obtained by diluting particles with a solvent in accordance with JIS-Z-8825 (2013).

A crusher or a classifier is used to obtain a powder with a predetermined particle size. Examples of the crushing method include a method of using a mortar, a ball mill, a sand mill, a vibratory ball mill, a planetary ball mill, a jet mill, a counter jet mill, a whirling airflow-type jet mill, a sieve, or the like. At the time of crushing, wet-type crushing in coexistence of water or an organic solvent such as hexane can also be used. As a classification method, a sieve or a wind force classifier or the like is used based on the necessity both in dry manner and in wet manner.

The BET specific surface area of the positive active material is, for example, preferably 0.5 m²/g or more and 3.0 m²/g or less, more preferably 1.0 m²/g or more and 2.0 m²/g or less, still more preferably 1.2 m²/g or more and 1.8 m²/g or less, and yet still more preferably 1.4 m²/g or more and 1.6 m²/g or less. When the BET specific surface area of the positive active material is small, that is, when the BET specific surface area of the positive active material is equal to or less than the above upper limit, the binder is less likely to be adsorbed in the pores of the positive active material, and the binder is easily present between the positive active material particles, so that the flaking of the positive active material layer can be more sufficiently suppressed. When the BET specific surface area of the positive active material is equal to or less than the above upper limit, it is possible to achieve a positive electrode in which the 180° peel strength between the positive active material layer and the positive electrode substrate is higher even when the content of the binder in the positive active material layer is small (for example, 6% by mass or less, typically 4% by mass or less). Meanwhile, by setting the BET specific surface area of the positive active material to be equal to or more than the above lower limit, the contact area between the positive active material and the nonaqueous electrolyte is sufficiently secured, and the charge-discharge performance can be enhanced. The BET specific surface area of the positive active material may be equal to or more than any of the above lower limits and equal to or less than any of the above upper limits.

The BET specific surface area of the positive active material is determined by the following method. The surface area of the positive active material is measured by a nitrogen gas adsorption method using a multipoint method at a relative pressure in the range of 0.05 to 0.2. The BET specific surface area (m²/g) is determined by dividing the obtained surface area (adsorption amount of nitrogen gas: m²) by the mass (g) of the positive active material.

The content of the positive active material in the positive active material layer is preferably 50% by mass or more and 99% by mass or less, more preferably 70% by mass or more and 98% by mass or less, still preferably 80% by mass or more and 95% by mass or less. In some aspects, the content of the positive active material may be 85% by mass or more, or 90% by mass or more (for example, 92% by mass or more). When the content of the positive active material falls within the range mentioned above, a balance can be achieved between the increased energy density and producibility of the positive active material layer.

The conductive agent is not particularly limited as long as the agent is a material with conductivity. Examples of such a conductive agent include carbonaceous materials, metals, and conductive ceramics. Examples of the carbonaceous materials include graphite, non-graphitic carbon, and graphene-based carbon. Examples of the non-graphitic carbon include carbon nanofibers, pitch-based carbon fibers, and carbon black. Examples of the carbon black include furnace black, acetylene black, and ketjen black. Examples of the graphene-based carbon include graphene, carbon nanotubes (CNTs), and fullerene. Examples of the form of the conductive agent include a powdery form and a fibrous form. As the conductive agent, one of these materials may be used singly, or two or more thereof may be mixed and used. These materials may be composited and then used. For example, a composite material of carbon black and CNT may be used. Among these materials, carbon black is preferable from the viewpoints of electron conductivity and coatability, and in particular, acetylene black is preferable.

The content of the conductive agent in the positive active material layer is preferably 1% by mass or more and 10% by mass or less, more preferably 3% by mass or more and 9% by mass or less. When the content of the conductive agent falls within the range mentioned above, the energy density of the nonaqueous electrolyte energy storage device can be enhanced.

Examples of the binder include: thermoplastic resins such as fluororesins (e.g., polytetrafluoroethylene (PTFE), polyvinylidene fluoride (PVDF)), polyethylene, polypropylene, polyacryl, and polyimide; elastomers such as an ethylene-propylene-diene rubber (EPDM), sulfonated EPDM, a styrene butadiene rubber (SBR), and a fluororubber; and polysaccharide polymers.

The content of the binder in the positive active material layer is preferably 1% by mass or more and 10% by mass or less, more preferably 3% by mass or more and 9% by mass or less. In some aspects, the content of the binder may be 7% by mass or less, or 5% by mass or less (for example, 3.5% by mass or less). The content of the binder falls within the range mentioned above, thereby allowing the positive active material to be stably held, and further suppressing the flaking of the positive active material layer.

Examples of the thickener include polysaccharide polymers such as carboxymethylcellulose (CMC) and methylcellulose. When the thickener has a functional group that is reactive with lithium and the like, the functional group may be deactivated by methylation or the like in advance. In the case of using a thickener, the content of the thickener in the positive active material layer is preferably 5% by mass or less, and more preferably 1% by mass or less. The technique disclosed herein can be preferably carried out in an aspect in which the positive active material layer contains no thickener.

The filler is not particularly limited. Examples of the filler include polyolefins such as polypropylene and polyethylene, inorganic oxides such as silicon dioxide, alumina, titanium dioxide, calcium oxide, strontium oxide, barium oxide, magnesium oxide and aluminosilicate, hydroxides such as magnesium hydroxide, calcium hydroxide and aluminum hydroxide, carbonates such as calcium carbonate, hardly soluble ionic crystals of calcium fluoride, barium fluoride, and barium sulfate, nitrides such as aluminum nitride and silicon nitride, and substances derived from mineral resources, such as talc, montmorillonite, boehmite, zeolite, apatite, kaolin, mullite, spinel, olivine, sericite, bentonite and mica, or artificial products thereof. In the case of using a filler, the content of the filler in the positive active material layer is preferably 5% by mass or less, and more preferably 1% by mass or less. The technique disclosed herein can be preferably carried out in an aspect in which the positive active material layer contains no filler.

The positive active material layer may contain typical nonmetal elements such as B, N, P, F, Cl, Br, and I, typical metal elements such as Li, Na, Mg, Al, K, Ca, Zn, Ga, Ge, Sn, Sr, and Ba, and transition metal elements such as Sc, Ti, V, Cr, Mn, Fe, Co, Ni, Cu, Mo, Zr, Nb, and W as a component other than the positive active material, the conductive agent, the binder, the thickener, and the filler.

The upper limit of the average thickness of the positive active material layer is 35 µm, preferably 34 µm, more preferably 33 µm, and still more preferably 32 µm. By setting the average thickness of the positive active material layer to be equal to or less than the above upper limit, the partial flaking of the positive active material layer is suppressed. The lower limit of the average thickness of the positive active material layer is, for example, preferably 10 µm, more preferably 20 µm, still more preferably 25 µm, and still more preferably 30 µm. By setting the average thickness of the positive active material layer to be equal to or more than the above lower limit, the capacity of the obtained nonaqueous electrolyte energy storage device can be increased. The average thickness of the positive active material layer may be equal to or more than any of the above lower limits and equal to or less than any of the above upper limits. The average thickness of the positive active material layer can be adjusted by the coating amount of a positive composite paste described later, the pressure of pressing at the time of the pressing is performed, and the like.

The lower limit of the 180° peel strength between the positive active material layer and the positive electrode substrate is 0.6 N/mm, preferably 0.7 N/mm, more preferably 0.8 N/mm, still more preferably 0.9 N/mm, and still more preferably 1.0 N/mm. By setting the 180° peel strength between the positive active material layer and the positive electrode substrate to be equal to or more than the above lower limit, the adhesion between the positive active material layer and the positive electrode substrate is enhanced, and the flaking of the positive active material layer is suppressed. The upper limit of the 180° peel strength may be, for example, 3.0 N/mm, 2.0 N/mm, 1.5 N/mm, or 1.2 N/mm. By setting the 180° peel strength to be equal to or less than the above upper limit, the productivity of the positive electrode can be enhanced. The 180° peel strength may be equal to or more than any of the above lower limits and equal to or less than any of the above upper limits. The 180°C peel strength can be adjusted by the type and amount of each component such as a binder contained in the positive active material layer, the pressure of pressing at the time of the pressing, and the like.

The density of the positive active material layer may be 2.0 g/cm³ or more and 4.0 g/cm³ or less, but is preferably 2.6 g/cm³ or more and 3.5 g/cm³ or less, and more preferably 2.7 g/cm³ or more and 3.0 g/cm³ or less. The upper limit of the density may be 2.9 g/cm³ or 2.8 g/cm³. By setting the density of the positive active material layer to be equal to or more than the above lower limit, the energy density of the positive active material layer can be increased. The effect of improving the foil passing property provided by setting the elongation at break of the positive electrode substrate to 3.8% or less can be more effectively exhibited. Meanwhile, the positive active material layer having a density of equal to or less than the above upper limit is further suppressed from flaking, and can be efficiently produced by a general pressing device or the like. The density of the positive active material layer can be adjusted by the type, amount, and shape of each component such as the positive active material contained in the positive active material layer, the pressure of pressing at the time of the pressing, and the like.

The average thickness of the positive electrode (the average thickness of the entire positive electrode) can be, for example, 10 µm or more and 200 µm or less, but is preferably 30 µm or more and 150 µm or less, more preferably 50 µm or more and 100 µm or less, and still more preferably 70 µm or more and 80 µm or less. By setting the average thickness of the positive electrode to be equal to or less than the above upper limit, the flaking of the positive active material layer is further suppressed. Meanwhile, when the average thickness of the positive electrode is set to be equal to or more than the above lower limit, the strength tends to be increased and the foil passing property also tends to be improved.

### <Method of producing positive electrode>

The positive electrode according to an embodiment of the present invention can be produced, for example, by applying a positive composite paste directly or with an intermediate layer interposed therebetween to a positive electrode substrate and drying the paste to form an unpressed positive active material layer, and pressing an unpressed positive electrode on which the unpressed positive active material layer is formed. The positive composite paste includes respective components constituting the positive active material layer, such as the positive active material, and the conductive agent or binder as an optional component. The positive composite paste usually further includes a dispersion medium.

The pressing is performed by pressurizing the surface of the unpressed positive active material layer. The pressing can be performed by a conventionally known pressing device such as a roll press. The 180° peel strength between the positive active material layer and the positive electrode substrate can be increased by increasing the pressure at the time of the pressing.

### <Nonaqueous electrolyte energy storage device>

A nonaqueous electrolyte energy storage device according to an embodiment of the present invention (hereinafter, also referred to simply as an "energy storage device") includes: an electrode assembly including a positive electrode, a negative electrode, and a separator; a nonaqueous electrolyte; and a case that houses the electrode assembly and the nonaqueous electrolyte. The electrode assembly is usually a stacked type in which a plurality of positive electrodes and a plurality of negative electrodes are stacked with a separator interposed therebetween, or a wound type in which a positive electrode and a negative electrode are wound in a state of being stacked with a separator interposed therebetween. The nonaqueous electrolyte is present to be impregnated in the positive electrode, the negative electrode, and the separator. A nonaqueous electrolyte secondary battery (hereinafter, also referred to simply as a "secondary battery") will be described as an example of the nonaqueous electrolyte energy storage device.

### (Positive electrode)

The positive electrode provided in the nonaqueous electrolyte energy storage device is the positive electrode according to one embodiment of the present invention described above.

### (Negative electrode)

The negative electrode includes a negative electrode substrate and a negative active material layer disposed directly on the negative electrode substrate or over the negative electrode substrate with an intermediate layer interposed therebetween. The configuration of the intermediate layer is not particularly limited, and for example, can be selected from the configurations exemplified for the positive electrode.

The negative electrode substrate has conductivity. As the material of the negative electrode substrate, a metal such as copper, nickel, stainless steel, nickel-plated steel, or aluminum, an alloy thereof, a carbonaceous material, or the like is used. Among these metals and alloys, the copper or copper alloy is preferable. Examples of the negative electrode substrate include a foil, a deposited film, a mesh, and a porous material, and a foil is preferable from the viewpoint of cost. Accordingly, the negative electrode substrate is preferably a copper foil or a copper alloy foil. Examples of the copper foil include a rolled copper foil and an electrolytic copper foil.

The average thickness of the negative electrode substrate is preferably 2 µm or more and 35 µm or less, more preferably 3 µm or more and 30 µm or less, still more preferably 4 µm or more and 25 µm or less, and particularly preferably 5 µm or more and 20 µm or less. The average thickness of the negative electrode substrate falls within the range mentioned above, thereby allowing the energy density per volume of the nonaqueous electrolyte energy storage device to be increased while increasing the strength of the negative electrode substrate.

The negative active material layer includes a negative active material. The negative active material layer includes optional components such as a conductive agent, a binder, a thickener, and a filler, if necessary. The optional components such as a conductive agent, a binder, a thickener, and a filler can be selected from the materials exemplified for the positive electrode. The negative active material layer is generally formed of a so-called negative composite containing a negative active material. The negative active material layer may be a layer substantially composed of only a negative active material such as metallic Li.

The negative active material layer may contain typical nonmetal elements such as B, N, P, F, Cl, Br, and I, typical metal elements such as Li, Na, Mg, Al, K, Ca, Zn, Ga, Ge, Sn, Sr, and Ba, and transition metal elements such as Sc, Ti, V, Cr, Mn, Fe, Co, Ni, Cu, Mo, Zr, Ta, Hf, Nb, and W as a component other than the negative active material, the conductive agent, the binder, the thickener, and the filler.

The negative active material can be appropriately selected from known negative active materials. As the negative active material for a lithium ion secondary battery, a material capable of occluding and releasing lithium ions is usually used. Examples of the negative active material include metallic Li; metals or metalloids such as Si and Sn; metal oxides or metalloid oxides such as oxides of Si, oxides of Ti, and oxides of Sn; titanium-containing oxides such as Li₄Ti₅O₁₂, LiTiO₂, and TiNb₂O₇: polyphosphoric acid compounds; silicon carbides; and carbon materials such as graphite and non-graphitic carbon (easily graphitizable carbon or hardly graphitizable carbon). Among these materials, graphite and non-graphitic carbon are preferable. In the negative active material layer, one of these materials may be used singly, or two or more thereof may be mixed and used.

The term "graphite" refers to a carbon material in which the average lattice spacing (d₀₀₂) of the (002) plane determined by an X-ray diffraction method before charge-discharge or in a discharge state is 0.33 nm or more and less than 0.34 nm. Examples of the graphite include natural graphite and artificial graphite. Artificial graphite is preferable from the viewpoint that a material having stable physical properties can be procured.

The term "non-graphitic carbon" refers to a carbon material in which the average lattice spacing (d₀₀₂) of the (002) plane determined by an X-ray diffraction method before charge-discharge or in a discharged state is 0.34 nm or more and 0.42 nm or less. Examples of the non-graphitic carbon include hardly graphitizable carbon and easily graphitizable carbon. Examples of the non-graphitic carbon include a resin-derived material, a petroleum pitch or a material derived from petroleum pitch, a petroleum coke or a material derived from petroleum coke, a plant-derived material, and an alcohol-derived material.

In this regard, the "discharged state" means a state discharged such that lithium ions that can be occluded and released in association with charge-discharge are sufficiently released from the carbon material as the negative active material. For example, the "discharged state" of a half cell that includes, as a working electrode, a negative electrode containing a carbon material as a negative active material, and includes metallic Li as a counter electrode is a state where the cell has an open circuit voltage of 1.2 V or higher.

The term "hardly graphitizable carbon" refers to a carbon material in which the d₀₀₂ is 0.36 nm or more and 0.42 nm or less.

The term "easily graphitizable carbon" refers to a carbon material in which the d₀₀₂ is 0.34 nm or more and less than 0.36 nm.

The negative active material is usually particles (powder). The average particle size of the negative active material can be, for example, 1 nm or more and 100 µm or less. When the negative active material is a carbon material, a titanium-containing oxide, or a polyphosphoric acid compound, the average particle size thereof may be 1 µm or more and 100 µm or less. When the negative active material is Si, Sn, an oxide of Si, an oxide of Sn, or the like, the average particle size thereof may be 1 nm or more and 1 µm or less. By setting the average particle size of the negative active material to be equal to or more than the above lower limit the negative active material is easily produced or handled. By setting the average particle size of the negative active material to be equal to or less than the above upper limit, the electron conductivity of the negative active material layer is improved. A crusher or a classifier is used to obtain a powder with a predetermined particle size. The crushing method and classification method can be selected from, for example, the methods exemplified for the positive electrode. When the negative active material is a metal such as metallic Li, the negative active material layer may have the form of a foil.

The content of the negative active material in the negative active material layer is preferably 60% by mass or more and 99% by mass or less, more preferably 90% by mass or more and 98% by mass or less. The content of the negative active material falls within the range mentioned above, thereby allowing a balance to be achieved between the increased energy density and producibility of the negative active material layer. When the negative active material is metallic Li, the content of the negative active material in the negative active material layer may be 99% by mass or more, and may be 100% by mass.

When a conductive agent is used in the negative active material layer, the content of the conductive agent with respect to the negative active material layer can be 10% by mass or less, and is preferably 8% by mass or less or 3% by mass or less. The technique disclosed herein can be preferably carried out in an aspect in which the negative active material layer contain no conductive agent. When a binder is used in the negative active material layer, the content of the binder in the negative active material layer is preferably 1% by mass or more and 10% by mass or less, and more preferably 2% by mass or more and 8% by mass or less. When a thickener is used in the negative active material layer, the content of the thickener in the negative active material layer can be 0.5% by mass or more and 8% by mass or less, and is preferably 1% by mass or more and 6% by mass or less. When a filler is used in the negative active material layer, the content of the filler in the negative active material layer can be 8% by mass or less, and is preferably 5% by mass or less or 1% by mass or less. The technique disclosed herein can be preferably carried out in an aspect in which the negative active material layer contains no filler.

### (Separator)

The separator can be appropriately selected from known separators. As the separator, for example, a separator composed of only a substrate layer, a separator where a heat resistant layer containing heat resistant particles and a binder is formed on one surface or both the surfaces of the substrate layer, or the like can be used. Examples of the form of the substrate layer of the separator include a woven fabric, a nonwoven fabric, and a porous resin film. Among these forms, the porous resin film is preferable from the viewpoint of a strength, and the nonwoven fabric is preferable from the viewpoint of the liquid retaining property of the nonaqueous electrolyte. As the material for the substrate layer of the separator, for example, a polyolefin such as polyethylene or polypropylene is preferable from the viewpoint of shutdown function, and polyimide, aramid, or the like is preferable from the viewpoint of resistance to oxidative decomposition. As the substrate layer of the separator, a material obtained by combining these resins may be used.

The heat resistant particles contained in the heat resistant layer preferably have a mass loss of 5% or less when the temperature is raised from room temperature to 500°C in an air atmosphere at 1 atm, and more preferably have a mass loss of 5% or less when the temperature is raised from room temperature to 800°C. Examples of materials that have a mass loss equal to or less than a predetermined value include inorganic compounds. Examples of the inorganic compound include oxides such as iron oxide, silicon oxide, aluminum oxide, titanium dioxide, zirconium oxide, calcium oxide, strontium oxide, barium oxide, magnesium oxide and aluminosilicate; nitrides such as aluminum nitride and silicon nitride; carbonates such as calcium carbonate; sulfates such as barium sulfate; hardly soluble ionic crystals such as calcium fluoride, barium fluoride, barium titanate; covalently bonded crystals such as silicon and diamond; and substances derived from mineral resources, such as talc, montmorillonite, boehmite, zeolite, apatite, kaolin, mullite, spinel, olivine, sericite, bentonite, and mica, and artificial products thereof. As the inorganic compound, simple substances or complexes of these substances may be used singly, or two or more thereof may be used in mixture. Among these inorganic compounds, silicon oxide, aluminum oxide, or aluminosilicate is preferable from the viewpoint of the safety of the nonaqueous electrolyte energy storage device.

The porosity of the separator is preferably 80% by volume or less from the viewpoint of a strength, and is preferably 20% by volume or more from the viewpoint of discharge performance. The "porosity" herein is a volume-based value, which means a value measured with a mercury porosimeter.

As the separator, a polymer gel containing a polymer and a nonaqueous electrolyte may be used. Examples of the polymer include polyacrylonitrile, polyethylene oxide, polypropylene oxide, polymethyl methacrylate, polyvinyl acetate, polyvinylpyrrolidone, and polyvinylidene fluoride. The use of the polymer gel has the effect of suppressing liquid leakage. As the separator, the polymer gel may be used concurrently with a porous resin film, a nonwoven fabric, or the like as described above.

### (Nonaqueous electrolyte)

The nonaqueous electrolyte can be appropriately selected from known nonaqueous electrolytes. For the nonaqueous electrolyte, a nonaqueous electrolyte solution may be used. The nonaqueous electrolyte solution contains a nonaqueous solvent and an electrolyte salt dissolved in the nonaqueous solvent.

The nonaqueous solvent can be appropriately selected from known nonaqueous solvents. Examples of the nonaqueous solvent include cyclic carbonates, chain carbonates, carboxylic acid esters, phosphoric acid esters, sulfonic acid esters, ethers, amides, and nitriles. As the nonaqueous solvent, solvents in which some hydrogen atoms contained in these compounds are substituted with halogen may be used.

Examples of the cyclic carbonates include ethylene carbonate (EC), propylene carbonate (PC), butylene carbonate (BC), vinylene carbonate (VC), vinylethylene carbonate (VEC), chloroethylene carbonate, fluoroethylene carbonate (FEC), difluoroethylene carbonate (DFEC), styrene carbonate, 1-phenylvinylene carbonate, and 1,2-diphenylvinylene carbonate. Among these carbonates, EC is preferable.

Examples of the chain carbonates include diethyl carbonate (DEC), dimethyl carbonate (DMC), ethyl methyl carbonate (EMC), diphenyl carbonate, trifluoroethyl methyl carbonate, and bis(trifluoroethyl)carbonate. Among these carbonates, EMC is preferable.

As the nonaqueous solvent, it is preferable to use the cyclic carbonate or the chain carbonate, and it is more preferable to use the cyclic carbonate and the chain carbonate in combination. The use of the cyclic carbonate allows the promoted dissociation of the electrolyte salt to improve the ionic conductivity of the nonaqueous electrolyte solution. The use of the chain carbonate allows the viscosity of the nonaqueous electrolyte solution to be kept low. In a case where a cyclic carbonate and a chain carbonate are used in combination, the volume ratio of the cyclic carbonate to the chain carbonate (cyclic carbonate : chain carbonate) is preferably in a range from 5 : 95 to 50 : 50, for example.

The electrolyte salt can be appropriately selected from known electrolyte salts. Examples of the electrolyte salt include a lithium salt, a sodium salt, a potassium salt, a magnesium salt, and an onium salt. Among these, a lithium salt is preferable.

Examples of the lithium salt include inorganic lithium salts such as LiPF₆, LiPO₂F₂, LiBF₄, LiClO₄, and LiN(SO₂F)₂, lithium oxalates such as lithium bis(oxalate)borate (LiBOB), lithium difluorooxalatoborate (LiFOB), and lithium bis(oxalate)difluorophosphate (LiFOP), and lithium salts having a halogenated hydrocarbon group, such as LiSO₃CF₃, LiN(SO₂CF₃)₂, LiN(SO₂C₂F₅)₂, LiN(SO₂CF₃)(SO₂C₄F₉), LiC(SO₂CF₃)₃, and LiC(SO₂C₂F₅)₃. Among these, inorganic lithium salts are preferable, and LiPF₆ is more preferable.

The content of the electrolyte salt in the nonaqueous electrolyte solution is, at 20°C and 1 atm, preferably 0.1 mol/dm³ or more and 2.5 mol/dm³ or less, more preferably 0.3 mol/dm³ or more and 2.0 mol/dm³ or less, still more preferably 0.5 mol/dm³ or more and 1.7 mol/dm³ or less, and particularly preferably 0.7 mol/dm³ or more and 1.5 mol/dm³ or less. The content of the electrolyte salt falls within the range mentioned above, thereby allowing the ionic conductivity of the nonaqueous electrolyte solution to be increased.

The nonaqueous electrolyte solution may contain an additive, besides the nonaqueous solvent and the electrolyte salt. Examples of the additive include halogenated carbonic acid esters such as fluoroethylene carbonate (FEC) and difluoroethylene carbonate (DFEC); oxalic acid salts such as lithium bis(oxalate)borate (LiBOB), lithium difluorooxalatoborate (LiFOB), and lithium bis(oxalate)difluorophosphate (LiFOP); imide salts such as lithium bis(fluorosulfonyl)imide (LiFSI); aromatic compounds such as biphenyl, alkylbiphenyl, terphenyl, partly hydrogenated terphenyl, cyclohexylbenzene, t-butylbenzene, t-amylbenzene, diphenyl ether, and dibenzofuran; partial halides of the aromatic compounds, such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; vinylene carbonate, methylvinylene carbonate, ethylvinylene carbonate, succinic anhydride, glutaric anhydride, maleic anhydride, citraconic anhydride, glutaconic anhydride, itaconic anhydride, cyclohexanedicarboxylic anhydride; ethylene sulfite, propylene sulfite, dimethyl sulfite, methyl methanesulfonate, busulfan, methyl toluenesulfonate, dimethyl sulfate, ethylene sulfate, sulfolane, dimethyl sulfone, diethyl sulfone, dimethylsulfoxide, diethylsulfoxide, tetramethylene sulfoxide, diphenyl sulfide, 4,4'-bis(2,2-dioxo-1,3,2-dioxathiolane), 4-methylsulfonyloxymethyl-2,2-dioxo-1,3,2-dioxathiolane, thioanisole, diphenyl disulfide, dipyridinium disulfide, 1,3-propene sultone, 1,3-propane sultone, 1,4-butane sultone, 1,4-butene sultone, perfluorooctane, tristrimethylsilyl borate, tristrimethylsilyl phosphate, tetrakistrimethylsilyl titanate, lithium monofluorophosphate, and lithium difluorophosphate. One of these additives may be used singly, or two or more thereof may be used in mixture.

The content of the additive contained in the nonaqueous electrolyte solution is preferably 0.01% by mass or more and 10% by mass or less, more preferably 0.1% by mass or more and 7% by mass or less, still more preferably 0.2% by mass or more and 5% by mass or less, and particularly preferably 0.3% by mass or more and 3% by mass or less, with respect to the total mass of the nonaqueous electrolyte solution. When the content of the additive falls within the above range, thereby making it possible to improve capacity retention performance or cycle performance after high-temperature storage, and to further improve safety.

As the nonaqueous electrolyte, a solid electrolyte may be used, or a nonaqueous electrolyte solution and a solid electrolyte may be used in combination.

The solid electrolyte can be selected from any material with ionic conductivity, which is solid at normal temperature (for example, 15°C to 25°C), such as lithium, sodium, and calcium. Examples of the solid electrolyte include sulfide solid electrolytes, oxide solid electrolytes, nitride solid electrolytes, and polymer solid electrolytes.

Examples of the lithium ion secondary battery include Li₂S-P₂S₅, LiI-Li₂S-P₂S₅, and Li₁₀Ge-P₂S₁₂ as the sulfide solid electrolyte.

The shape of the nonaqueous electrolyte energy storage device according to the present embodiment is not particularly limited, and examples thereof include cylindrical batteries, prismatic batteries, flat batteries, coin batteries, and button batteries.

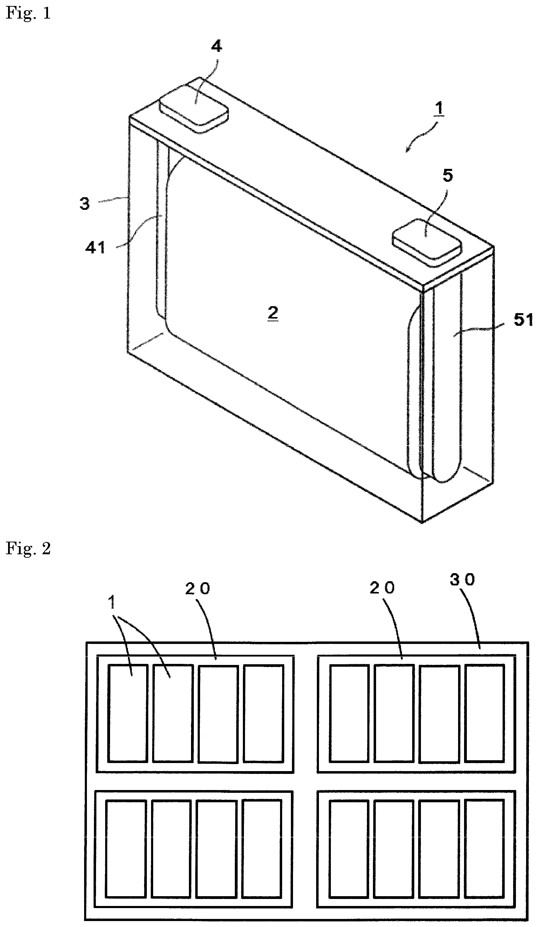

Fig. 1 illustrates a nonaqueous electrolyte energy storage device 1 as an example of prismatic batteries. It is to be noted that Fig. 1 is a view illustrating the inside of a case in a perspective manner. An electrode assembly 2 including a positive electrode and a negative electrode wound with a separator interposed therebetween is housed in a prismatic case 3. The positive electrode is electrically connected to a positive electrode terminal 4 via a positive electrode lead 41. The negative electrode is electrically connected to a negative electrode terminal 5 via a negative electrode lead 51.

### <Energy storage apparatus>

The nonaqueous electrolyte energy storage device according to the present embodiment can be mounted as an energy storage unit (battery module) configured by assembling a plurality of nonaqueous electrolyte energy storage devices on a power source for automobiles such as electric vehicles (EV), hybrid vehicles (HEV), and plug-in hybrid vehicles (PHEV), a power source for electronic devices such as personal computers and communication terminals, or a power source for power storage, or the like. In this case, the technique of the present invention may be applied to at least one nonaqueous electrolyte energy storage device included in the energy storage unit.

Fig. 2 shows an example of an energy storage apparatus 30 obtained by assembling energy storage units 20 each obtained by assembling two or more electrically connected nonaqueous electrolyte energy storage devices 1. The energy storage apparatus 30 may include a busbar (not illustrated) for electrically connecting two or more nonaqueous electrolyte energy storage devices 1 and a busbar (not illustrated) for electrically connecting two or more energy storage units 20. The energy storage unit 20 or the energy storage apparatus 30 may include a state monitor (not illustrated) that monitors the state of one or more nonaqueous electrolyte energy storage devices.

### <Method for producing nonaqueous electrolyte energy storage device>

A method for producing the nonaqueous electrolyte energy storage device according to the present embodiment can be appropriately selected from known methods. The producing method includes, for example, preparing an electrode assembly, preparing a nonaqueous electrolyte, and housing the electrode assembly and the nonaqueous electrolyte in a case. Preparing the electrode assembly includes: preparing a positive electrode and a negative electrode, and forming the electrode assembly by stacking or winding the positive electrode and the negative electrode with a separator interposed therebetween.

Housing the nonaqueous electrolyte in a case can be appropriately selected from known methods. For example, in the case of using a nonaqueous electrolyte solution for the nonaqueous electrolyte, the nonaqueous electrolyte solution may be injected from an inlet formed in the case, and the inlet may be then sealed.

### <Other embodiments>

It is to be noted that the nonaqueous electrolyte energy storage device according to the present invention is not limited to the embodiment mentioned above, and various changes may be made without departing from the gist of the present invention. For example, to the configuration of an embodiment, the configuration of another embodiment can be added, and a part of the configuration of an embodiment can be replaced by the configuration of another embodiment or a well-known technique. Furthermore, a part of the configuration according to an embodiment can be deleted. In addition, a well-known technique can be added to the configuration according to one embodiment.

While a case where the nonaqueous electrolyte energy storage device is used as a nonaqueous electrolyte secondary battery (for example, lithium ion secondary battery) that is chargeable and dischargeable has been described in the embodiment mentioned above, the type, shape, dimensions, capacity, and the like of the nonaqueous electrolyte energy storage device are arbitrary. The present invention can also be applied to capacitors such as various secondary batteries, electric double-layer capacitors, or lithium ion capacitors.

While the electrode assembly with the positive electrode and the negative electrode stacked with the separator interposed therebetween has been described in the embodiment mentioned above, the electrode assembly does not have to include the separator. For example, the positive electrode and the negative electrode may be brought into direct contact with each other, with a non-conductive layer formed on the active material layer of the positive electrode or negative electrode.

### EXAMPLES

Hereinafter, the present invention will be described more specifically by way of Examples, but the present invention is not limited to the following Examples.

### [Example 1]

### (Preparation of positive electrode)

LiNi_{1/3}Co_{1/3}Mn_{1/3}O₂ (BET specific surface area: 1.52 m²/g) was used as a positive active material, carbon black was used as a conductive agent, and polyvinylidene fluoride (PVDF) was used as a binder. An appropriate amount of N-methyl-pyrrolidone (NMP) was added to a mixture having a mass ratio of the positive active material, carbon black, and PVDF of 94:3:3 (in terms of solid content) to adjust the viscosity of the mixture, thereby obtaining a positive composite paste. The positive composite paste was applied to each of both the surfaces of an aluminum foil (A1100, average thickness: 15 µm, elongation at break: 3.5%) as a positive electrode substrate, and dried to provide an unpressed positive active material layer. Thereafter, roll pressing was performed to obtain a band-shaped positive electrode of Example 1 in which a positive active material layer having an average thickness of one layer of 31.5 µm and a density of 2.73 g/cm³ was provided on each of both the surfaces of the positive electrode substrate, and the average thickness was 78 µm. The 180° peel strength between the positive active material layer and the positive electrode substrate in the positive electrode of Example 1 was 1.04 N/mm.

### [Comparative Examples 1 to 5]

Each of positive electrodes of Comparative Examples 1 to 5 was prepared in the same manner as in Example 1 except that an aluminum foil having an average thickness and an elongation at break described in Table 1 was used as a positive electrode substrate, and the pressure of roll pressing was adjusted to set the average thickness and density of a positive active material layer and the average thickness of a positive electrode as described in Table 1. The 180° peel strength between the positive active material layer and the positive electrode substrate in each of the positive electrodes of Comparative Examples 1 to 5 is shown in Table 1.

### [Evaluation] (Sliding of positive active material Layer)

Each of the obtained positive electrodes of Example 1 and Comparative Examples 1 to 5 was cut with a Thomson cutter (20 mm × 50 mm), and the number of generated chips was observed with an optical microscope to confirm the presence or absence of sliding of the positive active material layer. Here, each of the positive electrodes of Examples and Comparative Examples was cut with a Thomson cutter with a width of 100 mm, and the number of generated chips was counted. The case where the number of chips was three or less was evaluated as (A), and the case where the number of chips was more than three was evaluated as (C). The results are shown in Table 1.

### [Evaluation] (Foil passing property)

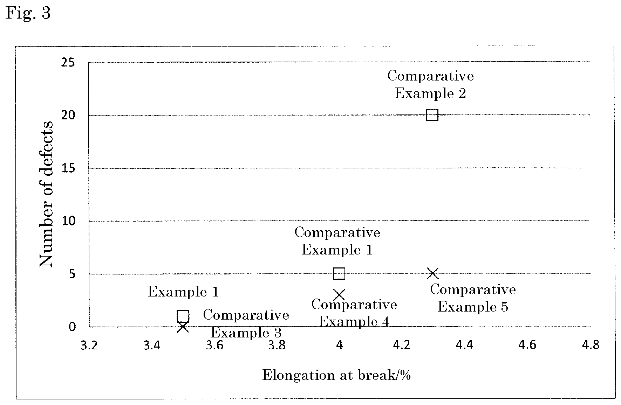

The foil passing property of each of the obtained positive electrodes of Example 1 and Comparative Examples 1 to 5 was evaluated in the following manner. Using a winding device, the positive electrode and a negative electrode were wound with a separator interposed therebetween to prepare a wound electrode assembly. In the negative electrode, a negative active material layer containing non-graphitizable carbon as a negative active material was provided on each of both the surfaces of a strip-shaped copper foil as a negative electrode substrate. As the separator, a strip-shaped polyolefin porous resin film was used. One thousand electrode assemblies were prepared using each of the positive electrodes of Examples and Comparative Examples, and the number of defective electrode assemblies (the number of defects) was counted. When the positive electrode, the negative electrode, and the separator were wound, the positive electrode meandered and the position of the positive electrode in the width direction in the electrode assembly was displaced, which was judged as defective. It was evaluated that when the number of defects was 1 or less, the foil passing property was high (A), it was evaluated that when the number of defects was 2 or more and 9 or less, the foil passing property was low (B), and it was evaluated that when the number of defects was 10 or more, the foil passing property was very low (C). The results are shown in Table 1 and Fig. 3. Fig. 3 is a graph showing a relationship between the elongation at break of the positive electrode substrate and the number of defects in a winding step.

**[Table 1]**

| | Positive electrode | Positive electrode substrate (Al foil) | | Positive active material layer | | Peel strength /Nmm⁻¹ | Sliding of positive active material layer | Foil passing property | |
|---|---|---|---|---|---|---|---|---|---|
| | Average thickness / µm | Average thickness / µm | Elongation at break / % | Average thickness / µm | Density / gcm⁻³ | | | Number of defects | - |
| Example 1 | 78 | 15 | 3.5 | 31.5 | 2.73 | 1.04 | A | 1 | A |
| Comparative Example 1 | 78 | 15 | 4.0 | 31.5 | 2.73 | 1.04 | A | 5 | B |
| Comparative Example 2 | 78 | 15 | 4.3 | 31.5 | 2.73 | 1.04 | A | 20 | C |
| Comparative Example 3 | 89 | 15 | 3.5 | 37.0 | 2.52 | 0.51 | C | 0 | A |
| Comparative Example 4 | 89 | 15 | 4.0 | 37.0 | 2.52 | 0.51 | C | 3 | B |
| Comparative Example 5 | 89 | 15 | 4.3 | 37.0 | 2.52 | 0.51 | C | 5 | B |

In each of the positive electrodes of Comparative Examples 3 to 5, the average thickness of the positive active material layer was more than 35 µm, the peel strength (180° peel strength between the positive active material layer and the positive electrode substrate) was also less than 0.6 N/mm, and the positive active material layer was apt to flake. In each of the positive electrodes of Comparative Examples 1 and 2, the average thickness of the positive active material layer was 35 µm or less, the peel strength was 0.6 N/mm or more, and the flaking of the positive active material layer could be suppressed. However, in each of the positive electrodes of Comparative Examples 1 and 2, a positive electrode substrate having an elongation at break of more than 3.8% was used, the number of defects in the winding step was large, and the foil passing property was low or very low. Meanwhile, in the positive electrode of Example 1 in which the average thickness of the positive active material layer was 35 µm or less, the peel strength was 0.6 N/mm or more, and the elongation at break of the positive electrode substrate was 3.8% or less, the flaking of the positive active material layer was suppressed, the number of defects in the winding step was small, and the foil passing property was high.

As shown in Fig. 3, regardless of the average thickness and peel strength of the positive active material layer, the smaller the elongation at break of the positive electrode substrate was, the smaller the number of defects in the winding step was. However, in the case of Example 1 and Comparative Examples 1 and 2 in which the average thickness of the positive active material layer was 35 µm or less and the peel strength was 0.6 N/mm or more, the reduction rate (inclination) of the number of defects with respect to the change in the elongation at break was larger than that in Comparative Examples 3 to 5. From this, it was confirmed that the improvement in the foil passing property by setting the elongation at break to 3.8% or less is particularly effectively exhibited when the average thickness of the positive active material layer is 35 µm or less and the peel strength is 0.6 N/mm or more.

### INDUSTRIAL APPLICABILITY

The present invention can be applied to a nonaqueous electrolyte energy storage device used as a power source for electronic devices such as personal computers and communication terminals, automobiles, and the like, and a positive electrode and the like provided in the nonaqueous electrolyte energy storage device.

### DESCRIPTION OF REFERENCE SIGNS

1: Nonaqueous electrolyte energy storage device
2: Electrode assembly
3: Case
4: Positive electrode terminal
41: Positive electrode lead
5: Negative electrode terminal
51: Negative electrode lead
20: Energy storage unit
30: Energy storage apparatus

## Claims

1. A positive electrode for a nonaqueous electrolyte energy storage device, comprising:
a positive electrode substrate containing metallic aluminum; and a positive active material layer stacked on the positive electrode substrate, wherein
an elongation at break of the positive electrode substrate is 3.8% or less,
an average thickness of the positive active material layer is 35 µm or less, and
a 180° peel strength between the positive active material layer and the positive electrode substrate is 0.6 N/mm or more.

2. The positive electrode according to claim 1, wherein the positive electrode has an average thickness of 80 µm or less.

3. The positive electrode according to claim 1 or 2, wherein the positive active material layer has a density of 2.6 g/cm³ or more.

4. A nonaqueous electrolyte energy storage device comprising the positive electrode according to claim 1 or 2.
